# EUROPÄISCHE PATENTSCHRIFT

(11) **EP 2 745 670 B1**
(45) Veröffentlichungstag und Bekanntmachung des Hinweises auf die Patenterteilung: **03.08.2016**
(21) Anmeldenummer: 13192619.8
(22) Anmeldetag: 13.11.2013
(51) Int. Cl.: A01D 75/28, A01D 41/16

(54) **Schrägfördererzusammenbau mit verbesserter Pendelachse**
Inclined conveyor assembly with improved swinging axle
Ensemble convoyeur incliné doté d'un axe oscillant amélioré

(30) Priorität: 19.12.2012 DE 102012223769
(43) Veröffentlichungstag der Anmeldung: 25.06.2014
(73) Patentinhaber: Deere & Company, Moline, IL 61265 (US)
(72) Erfinder: Fuchs, Volker, 54439 Saarburg (DE); Rittershofer, Martin, 67663 Kaiserslautern (DE); Juelke, Johannes, 03249 Sonnewalde (DE)
(74) Vertreter: Holst, Sönke

(56) Entgegenhaltungen:
- EP-A1- 0 243 540
- DE-A1- 10 018 211

## Beschreibung

Die vorliegende Erfindung bezieht sich auf einen Schrägfördererzusammenbau für einen Mähdrescher, mit einem Gehäuse, an dessen rückwärtigen Ende eine obere Schrägfördererwalze drehbar gelagert ist, einer am vorderen Ende des Gehäuses positionierten, unteren Schrägfördererwalze; einem um die untere Schrägfördererwalze und um die obere Schrägfördererwalze umlaufenden, endlosen Förderelement mit Mitnehmern und einem am vorderen Ende des Gehäuses um eine Pendelachse, die um einen Winkel schräg nach hinten und oben geneigt ist, schwenkbar angelenkten Pendelschild, an dem ein Erntevorsatz befestigbar ist.

### Stand der Technik

Selbstfahrende Mähdrescher umfassen ein Fahrgestell, das sich durch vordere, angetriebene Räder (oder Raupenlaufwerke) und rückwärtige, lenkbare Räder auf dem Boden abstützt. An der Vorderseite des Mähdreschers ist ein Schrägfördererzusammenbau angeordnet, an dessen vorderem Ende wiederum ein Erntevorsatz lösbar befestigt ist. Der Erntevorsatz kann beispielsweise als Schneidwerk mit einem Mähwerksbalken und einer darüber angeordneten Haspel und einer dahinter angeordneten Querförderschnecke bzw. einem Querförderband oder als Maispflücker mit Pflückeinheiten und einer Querförderschnecke ausgeführt sein. Beim Erntebetrieb gibt der Erntevorsatz das abgeschnittene oder aufgenommene Erntegut durch eine rückwärtige Abgabeöffnung an den Schrägfördererzusammenbau ab, der es wiederum in das Innere des Mähdreschers fördert, wo es ausgedroschen, getrennt und gereinigt wird.

Der Schrägfördererzusammenbau umfasst ein Gehäuse, in dem üblicherweise ein unterschlächtig arbeitender Kettenförderer um eine untere und eine obere Schrägfördererwalze umläuft, die drehbar am Gehäuse gelagert sind. Die untere Schrägfördererwalze ist rückwärtig der Abgabeöffnung des Erntevorsatzes angeordnet und die obere Schrägfördererwalze übergibt das Erntegut einer (Axial- oder Tangential-) Dreschtrommel oder einer Beschleunigerwalze im Mähdrescher.

Es wurden auch Schrägfördererzusammenbau mit oberschlächtig arbeitenden Förderbändern (DE 1 016 975 A) vorgeschlagen, und ein unterschlächtig arbeitender
Schrägfördererzusammenbau mit einem Gummi-Gewebe-Riemen, der quer angeordnete, von oben her in das Erntegut eingreifende Stahlleisten umfasst (DE 10 2007 049 839 B3, DE 10 2009 036 104 A1).

In vielen Fällen ist am vorderen Ende des Schrägfördererzusammenbaus ein so genannter

Pendelschild angebracht. Dabei handelt es sich um ein rahmenförmiges Element, das einerseits um eine sich horizontal und in Vorwärtsrichtung erstreckende (reelle oder virtuelle) Pendelachse schwenkbar am Gehäuse des eigentlichen Schrägfördererzusammenbaus angelenkt ist und an dem andererseits der Erntevorsatz anbringbar ist, beispielsweise durch obere Haken, die von oben her am Pendelschild anliegen. Der Pendelschild ermöglicht eine Schwenkbewegung des Erntevorsatzes gegenüber dem Schrägfördererzusammenbau um die horizontale Pendelachse, beispielsweise beim Befahren eines Seitenhanges. Der Schwenkbereich muss insbesondere dann relativ groß sein, wenn der Mähdrescher mit höhenverstellbaren vordereren Rädern ausgestattet ist, die den eigentlichen Mähdrescher und den Schrägfördererzusammenbau beim Befahren eines seitlichen Hangs horizontal halten. Hierzu sei auf den Stand der Technik nach DE 100 18 211 A1 und DE 295 19 842 U1 verwiesen.

Die nachveröffentlichte DE 10 2012 200 843 A1 zeigt einen Schrägförderer eines Mähdreschers mit einem vorderen Pendelschild, an dem ein Erntevorsatz abnehmbar befestigt ist. Der Pendelschild ist um eine horizontale, sich in Vorwärtsrichtung erstreckende Pendelachse gegenüber dem Gehäuse des Schrägförderers drehbar gelagert und trägt eine vordere Schrägfördererwalze, um die ein endloses, flexibles Förderelement umläuft, das auch um eine hintere Schrägfördererwalze umläuft.

Die Lage der Pendelachse ist im Stand der Technik derart gewählt, dass sie zumindest näherungsweise horizontal verläuft, wenn - den Schrägförderer um eine zur Drehachse der oberen Schrägfördererwalze parallele Drehachse verschwenkende - Aktoren das vordere Ende des Schrägförderers und den Erntevorsatz in eine Höhe über dem Boden verschwenkt haben, die einer gebräuchlichen Schnitthöhe entspricht.

Ein Nachteil der im Stand der Technik bekannten Orientierung der Pendelachse liegt darin, dass sich auch der Abstand zwischen einem Abgabeförderer des Erntevorsatzes (bei einem Schneidwerk die Querförderschnecke) und der unteren Schrägfördererwalze beträchtlich ändert, wenn diese drehbar, aber ansonsten unverstellbar am Gehäuse des Schrägförderers befestigt ist, was die Übergabe des Ernteguts vom Erntevorsatz in den Schrägförderer erschwert. Dadurch wird auch der Mähdrescher mit einer über die Breite nicht homogenen Schichtdicke des Ernteguts beaufschlagt, was auch dort zu unbefriedigenden Arbeitsergebnissen führen kann.

Zur Illustration des Standes der Technik wird auf die Figur 6 verwiesen. Die Figur 6 zeigt einen Schrägfördererzusammenbau 20 nach DE 10 2012 200 843 A1 mit einem Gehäuse 62, in dem eine obere Schrägfördererwalze 64 angeordnet ist. Ein Pendelschild 78 ist am vorderen Ende des Schrägfördererzusammenbaus 20 durch einen Schwenkstift 80 um eine horizontale Pendelachse 76 schwenkbar angelenkt. Die untere Schrägfördererwalze 90 ist am Pendelschild 78 drehbar gelagert. Wird der Pendelschild 78 um die Pendelachse 76 verschwenkt, ergeben sich relativ große Änderungen der Abstände zwischen den äußeren Enden der unteren Schrägfördererwalze 90, die in der ausgeschwenkten Stellung mit 90' gekennzeichnet ist, und der oberen Schrägfördererwalze 74. Diese Abstandsänderung kann durch das flexible Förderelement nach DE 10 2012 200 843 A1 nur in einem begrenzten Maße aufgenommen werden, was den erzielbaren Pendelwinkel einschränkt.

Das Problem lässt sich auch nicht durch eine virtuelle, durch die Mitte des Pendelschilds 78 verlaufende Pendelachse oder durch eine Pendelachse an der Unterseite des Pendelschilds lösen, denn aufgrund der Breite der Schrägfördererwalzen 64, 90 ändert sich auch dann der Abstand zwischen den äußeren Enden beider Schrägfördererwalzen 64, 90 immer noch signifikant.

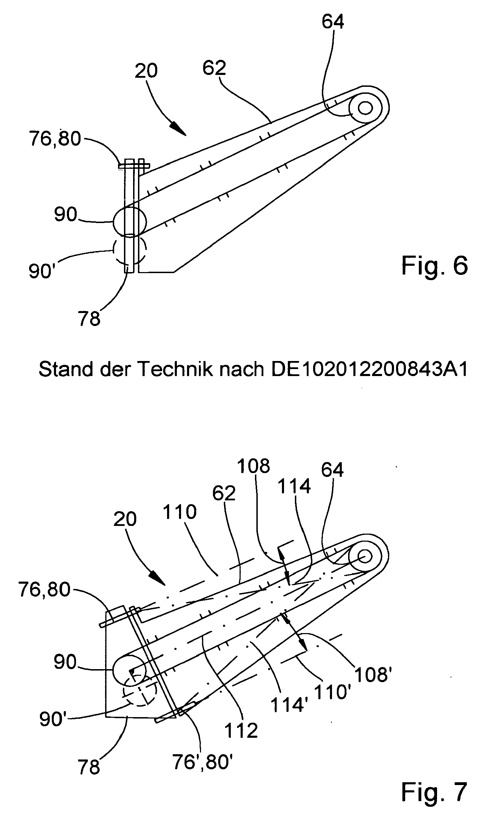

Diese geometrischen Probleme ergeben sich auch bei Schrägförderem mit am Gehäuse angebrachten unteren Schrägfördererwalzen, denn dann tritt der Abgabeförderer des Erntevorsatzes näherungsweise an die Stelle der unteren Schrägfördererwalze 90, 90' in der Figur 6, sodass sich ähnliche Übergabeprobleme ergeben.

In DE 100 18 211 A1 und EP 0 243 540 A1 sind die Pendelachsen schräg nach oben und hinten geneigt, jedoch mit relativ flachen Winkeln.

### Aufgabe

Es ist eine Aufgabe der vorliegenden Erfindung, die erwähnten Nachteile zu vermeiden.

### Lösung

Diese Aufgabe wird durch die Lehre des Anspruchs 1 gelöst, wobei die abhängigen Ansprüche Merkmale vorteilhafter Ausführungsformen wiedergeben.

Ein Schrägfördererzusammenbau für einen Mähdrescher umfasst ein Gehäuse, an dessen rückwärtigem Ende eine obere Schrägfördererwalze drehbar gelagert ist. Am vorderen Ende des Gehäuses ist eine untere Schrägfördererwalze angeordnet. Am vorderen Ende des Gehäuses ist weiterhin ein Pendelschild, an dem ein Erntevorsatz abnehmbar angebracht werden kann, um eine Pendelachse schwenkbar angelenkt. Um die untere Schrägfördererwalze und um die obere Schrägfördererwalze läuft ein endloses Förderelement mit Mitnehmern um. Die Pendelachse ist (bei einer im normalen Erntebetrieb üblichen Arbeits- bzw. Schnitthöhe und Orientierung des Erntevorsatzes über dem Boden) derart schräg nach hinten und oben geneigt, dass die Pendelachse parallel zu einer gedachten Verbindungslinie zwischen der Mitte des Pendelschilds (bzw. der Mitte der unteren Schrägfördererwalze) und der oberen Schrägfördererwalze orientiert ist.

Durch die vorgeschlagene Geometrie der Pendelachse erreicht man, dass sich der Abstand zwischen den äußeren Enden des Pendelschilds und dem Gehäuse des Schrägförderers (einschließlich dessen oberer Schrägfördererwalze) beim Verschwenken des Pendelschilds um die Pendelachse wesentlich weniger als im Stand der Technik variiert, was eine über die Breite des Schrägförderers homogene Erntegutübergabe erleichtert. Zur Illustration sei auf die Figur 7 verwiesen, in welcher ein erfindungsgemäßer Schrägfördererzusammenbau dargestellt ist, dessen Bezugszeichen jenen der Figur 6 entsprechen und der - auch wegen der Anbringung der unteren Schrägfördererwalze am Pendelschild - eine über die Breite homogenere Erntegutübergabe vom Erntevorsatz in den Schrägförderer ermöglicht, da die Abstandsänderung zwischen den Schrägfördererwalzen 90' und 64 kleiner als in Figur 6 bleibt. Diese Vorteile einschließlich einer verbesserten Erntegutübergabe vom Erntevorsatz bzw. Pendelschild in das Gehäuse des Schrägfördererzusammenbaus ergeben sich aber auch bei Schrägförderern, deren untere Schrägfördererwalze anders als in der Figur 7 dargestellt, am Gehäuse (und nicht am Pendelschild) gelagert ist.

Bei einer bevorzugten Ausführungsform der Erfindung ist die untere Schrägfördererwalze drehbar am Pendelschild abgestützt und ein endloses, dehnbares Förderelement mit Mitnehmern läuft um die untere Schrägfördererwalze und um die obere Schrägfördererwalze um. Dadurch macht die untere Schrägfördererwalze die Bewegung des Pendelschilds (und des Erntevorsatzes) um die Pendelachse mit und die räumliche Relation zwischen dem Erntevorsatz und seiner Abgabeöffnung und der unteren Schrägfördererwalze bleibt auch bei einem um die Pendelachse verschwenktem Erntevorsatz konstant. Die hierfür erforderliche Beweglichkeit zwischen der unteren Schrägfördererwalze und der oberen Schrägfördererwalze, um die beide das endlose Förderelement mit den Mitnehmern umläuft, wird dadurch ermöglicht, dass das Förderelement dehnbar ist. Es kann insbesondere aus einem Gummi-Gewebe-Riemen aufgebaut sein, an dem die Mitnehmer angebracht sind.

Die Pendelachse kann sich an der Ober- oder Unterseite des Pendelschilds befinden, d.h. oberhalb des Erntegutstroms oder darunter. Alternativ kann sie als virtuelle Achse mit Rollenlagern zwischen dem Pendelschild und dem Gehäuse ausgeführt sein.

### Ausführungsbeispiel

Diese und andere Aufgaben, Merkmale und Vorteile der vorliegenden Erfindung werden dem Fachmann nach dem Lesen der folgenden detaillierten Beschreibung und angesichts der

### Zeichnungen offensichtlich.

- Fig. 1: ist eine Seitenansicht eines Mähdreschers mit einem pendelnd am vorderen Ende des erfindungsgemäßen Schrägfördererzusammenbaus aufgehängten Erntevorsatz.
- Fig. 2: zeigt eine Draufsicht auf das endlose Förderelement und die Mitnehmer.
- Fig. 3: ist eine schematische Vorderansicht des Pendelschilds mit der daran befestigten unteren Schrägfördererwalze und dem vorderen Bereich des Schrägfördererzusammenbaus.
- Fig. 4: zeigt eine vergrößerte Ansicht des Schrägfördererzusammenbaus der Figur 1 mit einer zweiten Ausführungsform eines flexiblen Bodenelements.
- Fig. 5: zeigt eine Draufsicht auf eine dritte Ausführungsform eines flexiblen Bodenelements.
- Fig. 6: zeigt eine schematische Seitenansicht eines Schrägfördererzusammenbaus nach dem Stand der Technik, wie er weiter oben diskutiert wurde.
- Fig. 7: zeigt eine schematische Seitenansicht eines erfindungsgemäßen Schrägfördererzusammenbaus.

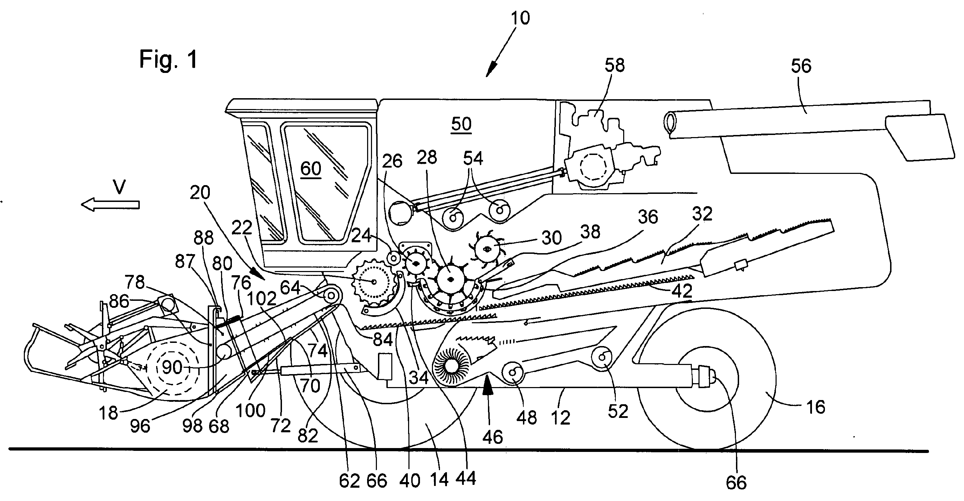

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V der Erntemaschine 10 im Erntebetrieb, die in der Figur 1 nach links verläuft. Die vorderen Räder 14 könnten auch durch Raupenlaufwerke ersetzt werden. Vorzugsweise sind die vorderen Räder 14 (bzw. die Raupenlaufwerke) gegenüber dem Fahrgestell 12 zum horizontalen Ausrichten des Fahrgestells 12 beim Befahren eines Seitenhangs höhenverstellbar. Die rückwärtigen Räder 16 sind an einer pendelnd gelagerten Achse befestigt, um der Bodenform zu folgen.

An den vorderen Endbereich der Erntemaschine 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 44 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet. Anstelle des dargestellten Mehrtrommeldreschwerks könnte eine beliebige andere Dresch- und Trenneinrichtung Verwendung finden, z.B. eine einzige Tangentialdreschtrommel mit nachfolgenden Strohschüttlern oder Trennrotoren oder eine Axialdresch- und Trenneinrichtung mit einem oder zwei Axialdresch- und Trennrotoren.

Das durch den Dreschkorb 34, den Separierkorb und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden. Die genannten Systeme werden mittels eines Verbrennungsmotors 58 angetrieben und von einem Bediener aus einer Fahrerkabine 60 heraus kontrolliert und gesteuert.

Der Schrägfördererzusammenbau 20 umfasst ein Gehäuse 62, das um die sich horizontal und quer zur Vorwärtsrichtung erstreckende Achse einer oberen Schrägfördererwalze 64 schwenkbar am Fahrgestell 12 angelenkt ist. Die Verschwenkung des Schrägfördererzusammenbaus 20 um die Achse der oberen Schrägfördererwalze 64 erfolgt mittels zweier Aktoren 66 in Form von Hydraulikzylindern, die auf beiden Seiten des Schrägfördererzusammenbaus 20 einen Endes am unteren, vorderen Ende des Fahrgestells 12 und anderen Endes rückwärtig des vorderen, unteren Endes des Gehäuses 62 des Schrägfördererzusammenbaus 20 an einem (bei Betrachtung von vorn) rechteckigen Rahmenelement 68 angelenkt sind. Eine Steuerung (nicht gezeigt) steuert die Aktoren 66 beim Erntebetrieb derart an, dass der Erntevorsatz 18 in einer gewünschten Höhe oder mit einer gewünschten Auflagekraft über den Boden des abzuerntenden Feldes bewegt wird. Das Gehäuse 62 des Schrägfördererzusammenbaus 20 umfasst in an sich bekannter Weise untere und obere Wände, die durch seitliche Wände untereinander verbunden sind. Die untere Wand des Gehäuses 62 ist an einem Punkt 70, der sich etwa auf der Hälfte der Länge des Gehäuses 62 befindet, schräg nach unten abgeknickt, sodass sie einen oberen Teil 74 und einen gegenüber dem oberen Teil 74 nach vorn und unten abgewinkelten, unteren Teil 72 umfasst, der an seinem unteren Ende unterhalb einer gedachten Verlängerung des oberen Teils 74 der unteren Wand des Gehäuses 62 mit dem rechteckigen Rahmenelement 68 verbunden ist.

Das rechteckige Rahmenelement 68 ist starr oder zur Anpassung der Orientierung des Erntevorsatzes 18 an die jeweiligen Erntebedingungen und/oder an die Abmessungen der Räder 14, 16 des Mähdreschers 10 und des Schrägfördererzusammenbaus 20 um eine quer zur Vorwärtsrichtung und horizontal verlaufende Achse (nicht gezeigt) schwenkbar mit dem Gehäuse 62 verbunden. Das rechteckige Rahmenelement 68 trägt über einen mittig am oberen, horizontalen Teil des Rahmenelements 68 angebrachten Schwenkstift 80 ein Pendelschild 78. Der Pendelschild 78 ist um eine durch den Schwenkstift 80 definierte Pendelachse 76, die bei Draufsicht von oben parallel zur Vorwärtsrichtung V und bei seitlicher Betrachtung, wie in Figur 1 gezeigt, schräg nach hinten und oben erstreckt, gegenüber dem Rahmen 68 und dem Gehäuse 62 schwenkbar.

Die Pendelachse 76 ist in der dargestellten Ausführungsform parallel zu einer gedachten Verbindungslinie 112 zwischen der Mitte des Pendelschilds 78 (d.h. der Drehachse der unteren Schrägfördererwalze 90) und der Drehachse der oberen Schrägfördererwalze 64 orientiert. Diese Neigung der Pendelachse 76 nach hinten und oben ist insbesondere dann vorgesehen, wenn ein um eine quer zur Vorwärtsrichtung und horizontal verlaufende Achse verstellbares Rahmenelement 68 sich in einer zum normalen Erntebetrieb geeigneten Position befindet. Bei anderen Ausführungsformen der Erfindung oder bei einem um die erwähnte Achse verstellten Rahmenelement 68 kann die Pendelachse 76 auch weiter nach unten oder oben orientiert sein und insbesondere in einem Bereich 108 liegen, der einerseits durch eine die Pendelachse 76 schneidende Parallele 110 zu der Verbindungslinie 112 zwischen der Drehachse der unteren Schrägfördererwalze 90 und der Drehachse der oberen Schrägfördererwalze 64 und anderseits durch eine gedachte Verbindungslinie 114 zwischen der Pendelachse 76 und der (Unterseite der) oberen Schrägfördererwalze 64 begrenzt ist. Dieser Bereich könnte auch symmetrisch zur erwähnten, die Pendelachse 76 schneidenden Parallelen 110 zur Verbindungslinie 112 nach oben erweitert werden. Wenn die Pendelachse 76 sich unterhalb des Pendelschilds 78 befindet, wie in der Figur 7 mit den apostrophierten Bezugszeichen gekennzeichnet, ist dieser Bereich 108' gegenüber dem zuvor erwähnten Bereich 108 um die Verbindungslinie 112 gespiegelt. Auch dieser Bereich 108' könnte symmetrisch zu der Parallelen 110' nach unten hin erweitert werden. Am Pendelschild 78 stützt sich ein Befestigungsrahmen 86 des Erntevorsatzes 18 durch Haken 88 ab, die Vorsprünge 87 des Pendelschilds 78 übergreifen. Der Erntevorsatz 18 kann demnach vom Pendelschild 78 abgenommen werden, indem der Erntevorsatz 18 über einer geeigneten Ablage (z.B. einem Schneidwerkstransportwagen) positioniert und dann der Schrägfördererzusammenbau 20 mittels der Aktoren 66 abgesenkt wird, wobei sich die Haken 88 dann vom Pendelschild 78 lösen. Die Anbringung erfolgt in umgekehrter Reihenfolge und Richtung. Es wäre auch möglich, weitere Riegel zwischen dem Erntevorsatz 18 und dem Pendelschild 78 vorzusehen, die manuell oder durch Fremdkraft betätigt werden können. Die Verschwenkung des Erntevorsatzes 18 und des Pendelschilds 78 um die Pendelachse 76 kann lediglich durch die Schwerkraft erfolgen, oder es sind fremdkraftbetätigte Aktoren (nicht gezeigt) vorgesehen, die den Schwenkwinkel um die Pendelachse 76 in an sich bekannter Weise selbsttätig basierend auf Signalen von über die Breite des Erntevorsatzes 18 verteilten Sensoren zur Erfassung der Höhe über dem Boden und/oder des Auflagedrucks variieren.

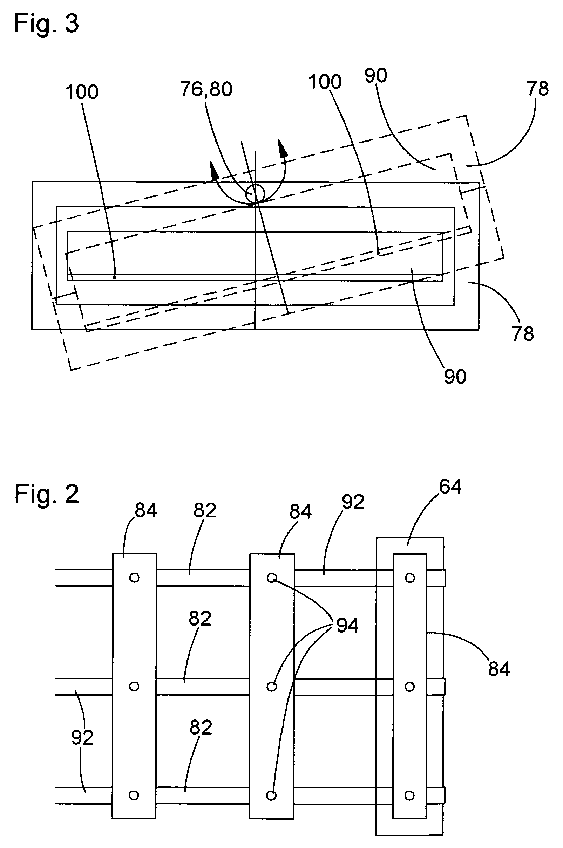

Eine untere Schrägfördererwalze 90 ist drehbar am Pendelschild 78 gelagert. Ihre Drehachse erstreckt sich bei horizontal orientiertem Pendelschild 78 quer zur Vorwärtsrichtung V und horizontal. Um die Schrägfördererwalzen 64, 90 läuft ein endloses Förderelement 82 mit Mitnehmern 84 um, das das Erntegut im Betrieb unterschlächtig fördert. Das Förderelement 82 ist dehnbar und umfasst vorzugsweise mehrere über die Breite des Gehäuses 62 verteilte Gummi-Gewebe-Riemen 92, die untereinander durch die Mitnehmer 84 verbunden sind, wie in der Figur 2 dargestellt. Dabei kann die Anordnung aus Figur 2 verdoppelt werden, d.h. jeweils zwei Mitnehmer 84 mit den zugehörigen Gummi-Gewebe-Riemen 92 im Gehäuse 62 seitlich nebeneinander angeordnet sein. Der Antrieb des Förderelements 82 erfolgt über an seiner Innenseite angebrachte Nocken, die in entsprechende Ausnehmungen in den Schrägfördererwalzen 64 und 90 eingreifen, von denen wenigstens eine vom Verbrennungsmotor 58 her antreibbar ist. Die Mitnehmer 84 sind als U-förmige Stahlleisten ausgeführt, die sich über die Breite des Gehäuses 62 erstrecken, könnten aber auch aus anderem Material bestehen und einen anderen Querschnitt aufweisen. Zur Herstellung einer optimalen Verbindung zwischen den Mitnehmern 84 und dem Förderelement 82 sind Schraubbolzen 94 in die Gummi-Gewebe-Riemen 92 einvulkanisiert. Das Förderelement 82 ist im Betrieb derart gespannt, dass die Mitnehmer 84 bei horizontalem Pendelschild 78 nicht am Boden des Gehäuses 62 entlang kratzen, was den Verschleiß und die Geräuschentwicklung minimiert.

Der Pendelschild 78 ist in seitlicher Ansicht, wie in der Figur 1 gezeigt, etwa trapezförmig oder dreieckig ausgebildet, da das rechteckige Rahmenelement 68 am vorderen Ende des Gehäuses 62 des Schrägfördererzusammenbaus 20 sich aufgrund der nach hinten und oben orientierten Pendelachse 76 schräg nach vorn und oben erstreckt, während der Befestigungsrahmen 86 des Erntevorsatzes 18 sich in der in Figur 1 dargestellten, üblichen Betriebslage des Erntevorsatzes 18 (einer normalen Schnitthöhe entsprechend) näherungsweise vertikal erstreckt und der Pendelschild 78 den dazwischen liegenden Raum ausfüllt. Der Pendelschild 78 hat, wie das Gehäuse 62 des Schrägfördererzusammenbaus 20, seitliche Wände 96 und einen Boden 98. Der Pendelschild 78 ist vorzugsweise durch Rahmenelemente (nicht gezeigt) versteift. Um das Drehmoment auf den Schwenkstift 80 zu reduzieren, können weitere, eine Relativbewegung erlaubende Verbindungselemente (nicht gezeigt), z.B. Rollen, zwischen dem Boden 98 bzw. dem unteren, rückwärtigen Ende des Pendelschilds 78 und dem rechteckigen Rahmenelement 68 am vorderen Ende des Gehäuses 62 des Schrägfördererzusammenbaus 20 angebracht werden.

Zwischen dem Boden 98 des Pendelschilds 78 und dem Punkt 70 zwischen den beiden Teilen 72, 74 der unteren Wand des Gehäuses 62 erstreckt sich ein flexibles Bodenelement 100. Das flexible Bodenelement 100 erstreckt sich über die gesamte Breite des Gehäuses 62. Das flexible Bodenelement 100 ist in der in Figur 1 dargestellten Ausführungsform aus einem in sich flexiblen Material hergestellt, wie Federstahl oder Gummi. Das flexible Bodenelement 100 ist (jeweils über seine Breite) zumindest am Boden 98 befestigt und am Punkt 70 des Gehäuses 62.

Das flexible Bodenelement 100 kann auch verschiebbar mit den seitlichen Wänden des Gehäuses 62 gekoppelt sein, beispielsweise durch nicht gezeigte Winkelelemente, einen horizontalen, mit dem flexiblen Bodenelement 100 gekoppelten Schenkel und einen vertikalen Schenkel mit einem oder mehreren Langlöchern umfassen, durch die sich ein mit der Seitenwand des Gehäuses 62 verbundener Stift erstreckt. Der Stift könnte auch am vertikalen Schenkel befestigt sein und sich durch ein Langloch in der Seitenwand des Gehäuses 62 erstrecken. Dadurch kann eine Abdichtung zwischen dem flexiblen Bodenelement 100 und der Seitenwand des Gehäuses 62 erzielt werden, um zu verhindern, dass signifikante Mengen an Erntegut in den Zwischenraum zwischen dem flexiblen Bodenelement 100 und dem vorderen Teil 72 der unteren Wand des Gehäuses 62 gelangen. Um zu verhindern, dass sich Erntegut im Zwischenraum zwischen dem flexiblen Bodenelement 100 und dem vorderen Teil 72 der unteren Wand des Gehäuses 62 ansammelt und schließlich die Bewegung des flexiblen Bodenelements 100 behindert, kann der vordere Teil 72 der unteren Wand des Gehäuses 62 mit Öffnungen versehen oder als Gitterkonstruktion ausgeführt werden.

Wie man anhand der Figur 3 erkennt, vollführen der Pendelschild 78 und die untere Schrägfördererwalze 90 die gleiche Schwenkbewegung um die Pendelachse 76. Dadurch wird die Gutübergabe vom Erntevorsatz 18 auf den Schrägfördererzusammenbau 20 auch bei um die Pendelachse 76 verschwenktem Pendelschild 78 optimiert. Die Dehnbarkeit des Förderelements 82 ermöglicht die Verschwenkung der unteren Schrägfördererwalze 90 gegenüber der oberen Schrägfördererwalze 64 um die Pendelachse 76. Diese Bewegung um die Pendelachse 76 macht auch das vordere Ende des flexiblen Bodenelements 100 mit, wie ebenfalls in der Figur 3 gezeigt wird. Das hintere Ende des flexiblen Bodenelements 100 ist am Punkt 70 hingegen mit dem Gehäuse 62 des Schrägfördererzusammenbaus 20 gekoppelt und vollführt keine Pendelbewegung um die Pendelachse 76. Das flexible Bodenelement 100 wird demnach bei der Pendelbewegung des Pendelschilds 78 und des Erntevorsatzes 18 um die Pendelachse 76 in sich verwunden. Durch seine Flexibilität kann es diese Verwindung durchführen. Somit erhält man einen durch das Bodenelement 100 gebildeten Boden des Schrägfördererzusammenbaus zwischen dem Pendelschild 78 und dem Punkt 70, der eine sich an den Pendelwinkel anpassende Rampe bildet und einen stufenlosen und relativ flachen Übergang des Ernteguts vom Pendelschild 78 zum hinteren Teil 74 des Gehäuses 62 des Schrägfördererzusammenbaus 20 ermöglicht.

Durch die Neigung der Pendelachse 76 nach oben und hinten bleibt die Abstandsänderung zwischen der oberen Schrägfördererwalze 64 und der unteren Schrägfördererwalze 90 beim Pendeln des Pendelschilds 78 um die Pendelachse 76 in einem hinreichend geringen Maß, das durch die Elastizität des Förderelements 82 aufgenommen werden kann. Außerdem wird dadurch die Gutübergabe vom Erntevorsatz 18 bzw. Pendelschild 78 in den Schrägfördererzusammenbau 20 verbessert.

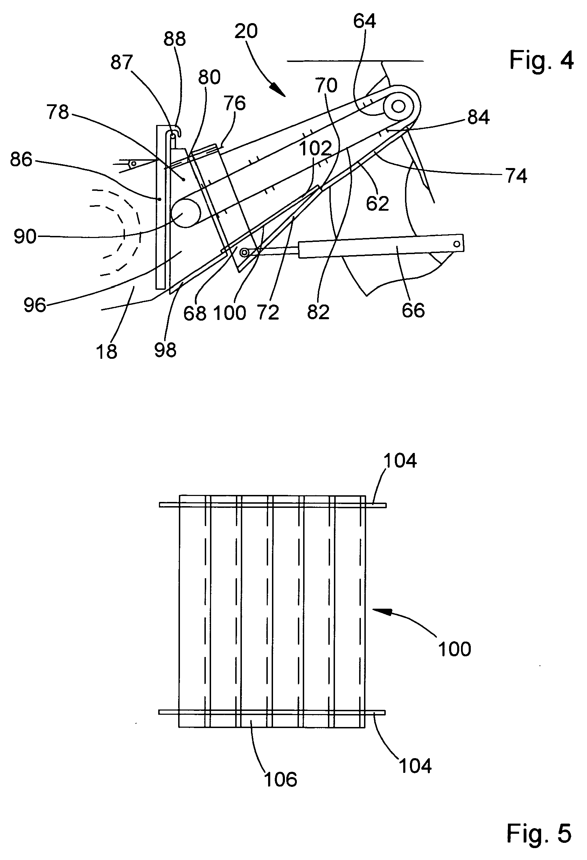

Bei einer in der Figur 4 dargestellten Ausführungsform sind oberhalb des flexiblen Bodenelements 100 noch Gleitelemente 102 angebracht, die aus einem Material (z.B. Kunststoff) bestehen, das einen kleineren Reibungskoeffizienten als das flexible Material (insbesondere Gummi) des flexiblen Bodenelements 100 aufweisen. Die Gleitelemente 102 können leistenförmig sein und nebeneinander in Förderrichtung des Ernteguts ausgerichtet oder quer dazu hintereinander angeordnet sein. Sie sind separat mit dem flexiblen Bodenelement 100 verbunden, z.B. durch Schrauben oder Nieten.

Bei der in der Figur 5 dargestellten Ausführungsform setzt sich das flexible Bodenelement 100 aus mehreren, in Längsrichtung (d.h. Flussrichtung des Ernteguts) aufeinanderfolgenden, überlappenden Elementen 106 zusammen. Diese Elemente 106 sind an sich in Vorwärtsrichtung V erstreckenden Tragstangen 104 befestigt. Die Elemente 106 können in dieser Ausführungsform aus in sich flexiblem Material, wie Federstahl oder Gummi bestehen, während die Tragstangen in sich starr oder flexibel sein können. Im zweiten Fall könnten die Elemente 106 auch in sich starr sein. Die Elemente 106 überdecken sich in der Gutflussrichtung, wobei in Gutflussrichtung nach hinten abfallende Stufen entstehen, die den Gutfluss nicht weiter stören. Anders als in der Figur 5 gezeigt könnten die Elemente 106 sich.auch in Gutflussrichtung erstrecken, d.h. um 90° gedreht sein.

Es bleibt noch anzumerken, dass das Förderelement 82 endlos hergestellt sein oder zwei Enden aufweisen kann, die durch geeignete Mittel untereinander verbindbar sind. Die Schrägförderwalzen 64, 90 können mit einem über die Länge konstanten Querschnitt versehen sein, wie in der Figur 2 gezeigt, oder sie umfassen eine Welle mit aufgesetzten Scheiben, auf denen sich das Förderelement 82 abstützt. Weiterhin muss die Pendelachse 78 nicht real sein, sondern kann auch virtuell sein, indem man den Pendelschild 78 durch Rollenlager am Rahmen 68 abstützt, was es ermöglicht, die Pendelachse 78 in die Mitte des Pendelschilds 72 zu legen.

## Patentansprüche

1. Schrägfördererzusammenbau (20) für einen Mähdrescher (10), mit einem Gehäuse (62), an dessen rückwärtigen Ende eine obere Schrägfördererwalze (64) drehbar gelagert ist, einer am vorderen Ende des Gehäuses (62) positionierten, unteren Schrägfördererwalze (90); einem um die untere Schrägfördererwalze (90) und um die obere Schrägfördererwalze (64) umlaufenden, endlosen Förderelement (82) mit Mitnehmern (84) und einem am vorderen Ende des Gehäuses (62) um eine Pendelachse (76), die um einen Winkel schräg nach hinten und oben geneigt ist, schwenkbar angelenkten Pendelschild (78), an dem ein Erntevorsatz (18) befestigbar ist, **dadurch gekennzeichnet, dass** die Pendelachse (76) parallel zu einer gedachten Verbindungslinie (112) zwischen der unteren Schrägfördererwalze (90) und der oberen Schrägfördererwalze (64) orientiert ist.

2. Schrägfördererzusammenbau (20) nach Anspruch 1, wobei die untere Schrägfördererwalze (90) am Pendelschild (78) drehbar abgestützt und das endlose Förderelement (82) dehnbar ist.

3. Schrägfördererzusammenbau (20) nach Anspruch 2, wobei das endlose Förderelement (82) einen oder mehrere Gummi-Gewebe-Riemen (92) umfasst, an dem oder denen die Mitnehmer (84) angebracht sind.

4. Schrägfördererzusammenbau (20) nach einem der vorhergehenden Ansprüche, wobei die Pendelachse (76) sich an der Ober- oder Unterseite des Pendelschilds (78) befindet oder als virtuelle Achse mit Rollenlagern zwischen dem Pendelschild (78) und dem Gehäuse (62) ausgeführt ist.

5. Mähdrescher (10) mit einem Fahrgestell (12), vorderen und hinteren Rädern (14, 16) und/oder Raupenlaufwerken und einem an der Vorderseite des Mähdreschers (10) angebrachten Schrägfördererzusammenbau (20) nach einem der Ansprüche 1 bis 4.

6. Mähdrescher (10) nach Anspruch 5, **dadurch gekennzeichnet, dass** die vorderen Räder (14) gegenüber dem Fahrgestell (12) zum horizontalen Ausrichten des Fahrgestells (12) beim Befahren eines Seitenhangs höhenverstellbar sind.

## Claims

1. Feeder house assembly (20) for a combine harvester (10), with a housing (62), at the rear end of which an upper feeder house roller (64) is rotatably mounted, a lower feeder house roller (90) which is positioned at the front end of the housing (62); an endless feeder element (82) which revolves around the lower feeder house roller (90) and around the upper feeder house roller (64) and has drivers (84), and an oscillating shield (78) which is coupled to the front end of the housing (62) so as to be pivotable about an axis of oscillation (76), which is inclined obliquely rearwards and upwards by an angle, and to which a harvesting header (18) is fastenable, **characterized in that** the axis of oscillation (76) is oriented parallel to an imaginary connecting line (112) between the lower feeder house roller (90) and the upper feeder house roller (64).

2. Feeder house assembly (20) according to Claim 1, wherein the lower feeder house roller (90) is rotatably supported on the oscillating shield (78), and the endless feeder element (82) is expandable.

3. Feeder house assembly (20) according to Claim 2, wherein the endless feeder element (82) comprises one or more rubber woven fabric belts (92) to which the drivers (84) are attached.

4. Feeder house assembly (20) according to one of the preceding claims, wherein the axis of oscillation (76) is located on the upper or lower side of the oscillating shield (78) or is formed as a virtual axis with roller bearings between the oscillating shield (78) and the housing (62).

5. Combine harvester (10) with a chassis (12), front and rear wheels (14, 16) and/or caterpillar drives and a feeder house assembly (20), which is attached to the front side of the combine harvester (10), according to one of Claims 1 to 4.

6. Combine harvester (10) according to Claim 5, **characterized in that** the front wheels (14) are height-adjustable in relation to the chassis (12) for the horizontal alignment of the chassis (12) during travel over a lateral slope.

## Revendications

1. Ensemble de convoyeur incliné (20) pour une moissonneuse-batteuse (10), comprenant un boîtier (62), au niveau de l'extrémité arrière duquel est supporté à rotation un rouleau transporteur incliné supérieur (64), un rouleau transporteur incliné inférieur (90) positionné à l'extrémité avant du boîtier (62) ; un élément transporteur sans fin (82), tournant autour du rouleau transporteur incliné inférieur (90) et autour du rouleau transporteur incliné supérieur (64) avec des éléments d'entraînement (84) et un panneau oscillant (78) articulé de manière pivotante à l'extrémité avant du boîtier (62) autour d'un axe de pendule (76) qui est incliné vers l'arrière et vers le haut obliquement suivant un certain angle, au niveau duquel peut être fixée une tête de récolte (18), **caractérisé en ce que** l'axe de pendule (76) est orienté parallèlement à une ligne de connexion imaginaire (112) entre le rouleau transporteur incliné inférieur (90) et le rouleau transporteur incliné supérieur (64).

2. Ensemble de convoyeur incliné (20) selon la revendication 1, dans lequel le rouleau transporteur incliné inférieur (90) est supporté à rotation sur le panneau oscillant (78) et l'élément transporteur sans fin (82) est extensible.

3. Ensemble de convoyeur incliné (20) selon la revendication 2, dans lequel l'élément transporteur sans fin (82) comprend une ou plusieurs courroies en tissu caoutchouté (92) sur laquelle ou lesquelles sont montés les éléments d'entraînement (84).

4. Ensemble de convoyeur incliné (20) selon l'une quelconque des revendications précédentes, dans lequel l'axe de pendule (76) se trouve au niveau du côté supérieur ou inférieur du panneau oscillant (78) ou est réalisé sous forme d'axe virtuel avec des paliers à rouleaux entre le panneau oscillant (78) et le boîtier (62).

5. Moissonneuse-batteuse (10) comprenant un mécanisme de roulement (12), des roues avant et arrière (14, 16) et/ou des systèmes de roulement à chenille et un ensemble de convoyeur incliné (20) selon l'une quelconque des revendications 1 à 4, monté sur le côté avant de la moissonneuse-batteuse (10).

6. Moissonneuse-batteuse (10) selon la revendication 5, **caractérisée en ce que** les roues avant (14) peuvent être réglées en hauteur par rapport au mécanisme de roulement (12) pour l'orientation horizontale du mécanisme de roulement (12) lors du déplacement sur une pente latérale.
